**Europäisches Patentamt**

**European Patent Office**

**Office européen des brevets**

(19)

(11) Veröffentlichungsnummer: **0 175 307**
**B1**

(12)
# EUROPÄISCHE PATENTSCHRIFT

(45) Veröffentlichungstag der Patentschrift:
**18.01.89**

(51) Int. Cl.⁴: **H 04 L 25/52,** H 03 M 13/00

(21) Anmeldenummer: **85111625.1**

(22) Anmeldetag: **13.09.85**

(54) **Regenerator für digitale Signale im AMI-Code mit einem Coderegelprüfer.**

(30) Priorität: **18.09.84 DE 3434248**

(43) Veröffentlichungstag der Anmeldung:
**26.03.86 Patentblatt 86/13**

(45) Bekanntmachung des Hinweises auf die Patenterteilung:
**18.01.89 Patentblatt 89/3**

(84) Benannte Vertragsstaaten:
**AT BE CH DE FR GB IT LI NL SE**

(56) Entgegenhaltungen:
**EP-A- 0 092 215**
**DE-A- 3 044 526**

(73) Patentinhaber: **Siemens Aktiengesellschaft Berlin und München, Wittelsbacherplatz 2, D-8000 München 2 (DE)**

(72) Erfinder: **Meyer, Fritz, Dr.-Ing., Wifostrasse 5, D-8034 Germering (DE)**

## Beschreibung

Die Erfindung betrifft einen Regenerator entsprechend dem Oberbegriff des Anspruchs 1.

Regeneratoren für digitale Signale im AMI-Code sind aus der DE-OS 32 14 555 bekannt. Die bekannten Regeneratoren enthalten einen eingangsseitigen Schmitttrigger als Amplitudenentscheider und ein nachgeschaltetes D-Flip-Flop als Zeitentscheider, durch das regenerierte digitale Signale im Differenz-Binär-Code erzeugt werden. Der bekannte Regenerator enthält ausserdem einen Coderegelprüfer, dessen einer Eingang mit dem Eingang des Regenerators und dessen anderer Eingang mit dem Ausgang des Schmitttriggers über ein Verzögerungsglied so verbunden ist, dass die Laufzeit vom Regeneratoreingang bis zum zweiten Eingang des Coderegelverletzungsprüfers einer Bitdauer entspricht.

Bei einer Integration des bekannten Regenerators mit Coderegelprüfer ergeben sich Schwierigkeiten hinsichtlich der Integration des Schmitttriggers, ausserdem hinsichtlich der Integration der zur Einstellung der Verzögerungszeit benötigten Verzögerungsanordnungen. Weiterhin können Schwierigkeiten auftreten, die sich aus der Temperaturempfindlichkeit der Schaltschwellen den Schmitttriggers ergeben. Ein Nachteil der bekannten Anordnung ist, dass bei der Feststellung von Codefehlern ein regeneriertes Signal mit dem noch unregenerierten AMI-Signal am Regeneratoreingang, das noch Rausch- und Störsignale enthalten kann, verglichen wird. Hierdurch entsteht neben hoher Störempfindlichkeit eine gewisse Unsicherheit bei der Feststellung von Codefehlern.

Es ist bereits auch bekannt, Regeneratoren für AMI-Signale so aufzubauen, dass in einem Regeneratorweg die positiven und im anderen Regeneratorweg die negativen Signalimpulse regeneriert werden. Ein derartiger Regenerator benötigt aber in der Regel eine vergleichsweise aufwendige Prüfschaltung. Die Übertragungsqualität hängt von der zuverlässigen Funktion des Coderegelprüfers ab, so dass eine Möglichkeit bestehen sollte, die Funktion des Coderegelprüfers zu testen. Die Aufgabe bei der vorliegenden Erfindung besteht also darin, einen wenig aufwendigen und störsicheren Regenerator für AMI-Signale mit Coderegelprüfer zu entwickeln, der seinerseits einfach zu überprüfen ist.

Erfindungsgemäss wird die Aufgabe durch einen Regenerator der eingangs erwähnten Art gelöst, der durch die Merkmale des Kennzeichens des Patentanspruchs 1 weitergebildet ist. Besonders vorteilhaft bei der erfindungsgemässen Lösung ist im Hinblick auf eine monolithische Integration der Aufbau ohne kapazitive oder induktive Bauelemente und mit nur einem Widerstand im Coderegelprüfer. Auch die Verwendung von Leitungen entfällt auf Grund geeigneter Taktansteuerung der verwendeten 3 Flip-Flops. Eine Möglichkeit zum Anschluss extern erzeugter Prüfimpulse an den Coderegelprüfer bietet eine Weiterentwicklung des erfindungsgemässen Regenerators, die im Patentanspruch 2 näher beschrieben ist.

Die Erfindung soll im folgenden anhand der Zeichnungen näher erläutert werden.

In der Zeichnung zeigt

Fig. 1 das Blockschaltbild des erfindungsgemässen Regenerators,

Fig. 2 ein detailliertes Schaltbild des im Regenerator nach Fig. 1 enthaltenen Coderegelprüfers und

Fig. 3 ein Impulsdiagramm zu Fig. 1 und 2.

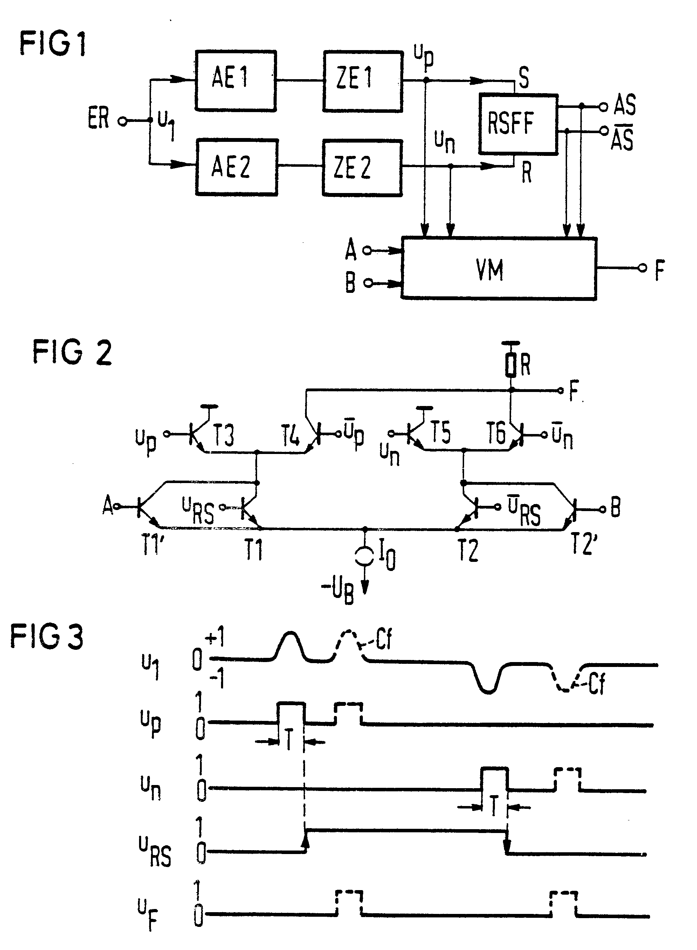

In Fig. 1 ist mit ER der Eingang des Regenerators bezeichnet, an den die Eingänge eines ersten und eines zweiten Amplitudenentscheiders gegebenenfalls über einen Übertrager mit mittelangezapfter Sekundärwinklung angeschlossen sind. Vom ersten Amplitudenentscheider AE1 werden deshalb nur die positiven Signalimpulse des AMI-Eingangssignals amplitudenmässig entschieden, während dies für die negativen Signalimpulse im zweiten Amplitudenentscheider AE2 geschieht. Bei den Amplitudenentscheidern handelt es sich um Verstärker mit einer Einschaltschwelle, die Schwellenspannung liegt jeweils etwa bei der halben Amplitude der Eingangssignalimpulse. Die Amplitudenentscheider bilden mit den nachgeschalteten ersten bzw. zweiten Zeitentscheidern ZE1, ZE2 jeweils eine Reihenschaltung für die positiven bzw. die negativen Eingangssignalimpulse. Bei den Zeitentscheidern handelt es sich um D-Flip-Flops, die mit dem Bittakt der digitalen Signale getaktet sind. Mit dem Ausgang des ersten Zeitentscheiders ZE1 ist der Setzeingang S eines nachgeschalteten RS-Flip-Flops verbunden, dessen Rücksetzeingang R an den Ausgang des zweiten Zeitentscheiders ZE2 angeschlossen ist. Im RS-Flip-Flop werden die positiven und die negativen regenerierten Signalimpulse wieder miteinander verknüpft, am Ausgang AS bzw. $\overline{\text{AS}}$ des RS-Flip-Flops steht ein regeneriertes digitales Signal im Differenz-Binär-Code an, das in bekannter Weise mittels einer am Ende kurzgeschlossenen Stichleitung entsprechender Länge in ein AMI-Signal umgeformt werden kann. Das RS-Flip-Flop erhält zusätzlich den Bittakt der digitalen Signale, die Taktansteuerung ist dabei in Verbindung mit der der D-Flip-Flops so gewählt, dass Imformationsänderungen im FS-Flip-Flop genau eine Bitperiode später gegenüber den Signaländerungen an den D-Flip-Flops auftreten.

Mit den Ausgängen der Beiden Zeitentscheider ZE1, ZE2 sowie mit den beiden Ausgängen AS, $\overline{\text{AS}}$ des RS-Flip-Flops sind zugeordnete Eingänge eines Coderegelprüfers VM verbunden. Durch diesen Coderegelprüfer wird bei Auftreten eines Codefehlers im Eingangssignal $u_1$ des Regenerators ein Impuls im Fehlersignal $u_F$ erzeugt, das am Ausgang F des Coderegelprüfers ansteht. Zusätzlich kann der Coderegelprüfer durch Prüfimpulse an den Eingängen A, B überwacht werden.

Die detaillierte Schaltung des Coderegelprüfers VM ist in der Fig. 2 dargestellt. Der Coderegelprüfer enthält einen ersten, durch die ersten beiden Transistoren T1, T2 gebildeten emittergekoppelten Differenzverstärker, dessen gemeinsamer Emitteranschluss über eine Stromquelle $1_0$ an eine Spannungsquelle $-U_B$ angeschlossen ist. Der Basisanschluss des ersten Transistors T1 ist mit dem Ausgangsanschluss AS des RS-Flip-Flops für das nichtinverse Ausgangssignal $u_{RS}$ verbunden, der Basisanschluss des Transistors T2 ist entsprechend mit dem inversen Ausgangsanschluss $\overline{AS}$ verbunden und erhält dessen Ausgangssignal $\overline{u}_{RS}$. Mit dem Kollektoranschluss des ersten Transistors T1 ist der gemeinsame Emitteranschluss eines dritten und eines vierten Transistors T3, T4 verbunden, die zusammen einen zweiten emittergekoppelten Differenzverstärker bilden. Der Basisanschluss des dritten Transistors T3 ist mit den Ausgangsanschluss des ersten Zeitentscheiders ZE1 verbunden und erhält dessen Ausgangssignal $u_p$. Der Basisanschluss des vierten Transistors T4 ist mit dem inversen Ausgangsanschluss des ersten Zeitentscheiders ZE1 verbunden und erhält entsprechend das Ausgangssignal $\overline{u}_p$. Der Kollektoranschluss des dritten Transistors T3 ist mit Bezugspotential verbunden, während der Kollektoranschluss des vierten Transistors T4 mit dem Ausgangsanschluss F des Coderegelprüfers sowie über einen Widerstand R mit Bezugspotential verbunden ist. In entsprechender Weise ist der Kollektoranschluss des zweiten Transistors T2 mit den verbundenen Emitteranschlüssen eines fünften und eines sechsten Transistors T5, T6 verbunden, wobei der Basisanschluss des fünften Transistors mit dem nichtinvertierenden Ausgangsanschluss des zweiten Zeitentscheiders ZE2 verbunden ist und das entsprechende Ausgangssignal $u_m$ erhält, während der Basisanschluss des sechsten Transistors T6 mit dem invertierenden Ausgangsanschluss verbunden ist und das Signal $\overline{u}_n$ erhält. Der Kollektoranschluss des fünften Transistors T5 ist mit Bezugspotential verbunden, während der Kollektoranschluss des sechsten Transistors T6 mit dem Ausgangsanschluss F des Coderegelprüfers verbunden ist.

Zur Erläuterung der Funktion ist in der Fig. 3 das Eingangssignal $u_1$ des Regenerators, die Ausgangssignale $u_p$ und $u_n$ des ersten und des zweiten Zeitentscheiders ZE1, ZE2, das Ausgangssignal $u_{RS}$ des RS-Flip-Flops und das Ausgangssignal $u_F$ des Coderegelprüfers VM dargestellt. Es ist erkennbar, dass ein positiver Eingangssignalimpuls $u_1$ einen Augangssignalimpuls $u_p$ am Ausgang des ersten Zeitentscheiders erzeugt und das durch diesen Signalimpuls das RS-Flip-Flop gesetzt wird. Entsprechend erzeugt ein negativer Eingangssignalimpuls einen Ausgangssignalimpuls $u_n$ am zweiten Zeitentscheider ZE2, durch den das RS-Flip-Flop zurückgesetzt wird. Ein Codefehler Cf, der beispielsweise durch einen positiven oder einen negativen Doppelimpuls verursacht wird, erzeugt zwar einen zweiten Ausgangssignalimpuls $u_p$ am Ausgang des ersten Zeitentscheiders ZE1 oder einen entsprechenden Impuls am Ausgang des zweiten Zeitenscheiders ZE2, da das RS-Flip-Flop aber bereits gesetzt bzw. rückgesetzt ist, können diese Störimpulse Cf hinsichtlich des Ausgangssignals $u_{RS}$ des RS-Flip-Flops nicht wirksam werden. Dennoch müssen die Codefehlerimpulse vom Coderegelprüfer VM festgestellt werden. Zur Erläuterung der Funktion des Coderegelprüfers dient wiederum das Impulsdiagramm nach der Fig. 3. Beim Auftreten eines positiven Eingangssignalimpulses $u_1$ wird zwar der Transistor T3 leitend geschaltet, da der Transistor T1 aber noch gesperrt ist, fliesst im linken Zweig des Coderegelprüfers kein Strom. In diesem Falle fliesst ein Strom durch die Transistoren T2 und T6 im rechten Zweig des Coderegelprüfers. Nach dem Umschalten des RS-Flip-Flops leiten der erste Transistor T1 und der vierte Transistor T4, während die Transistoren T2 und T6 gesperrt sind. Der Strom wird in diesem Falle also vom rechten auf den linken Zweig des Coderegelprüfers umgeschaltet, so dass sich am Ausgang F keine Potentialänderung ergibt. Beim Auftreten eines Codefehlers Cf in Form eines zweiten positiven Eingangssignalimpulses wird der über den ersten Transistor T1 fliessende Strom vom vierten Transistor T4 auf den dritten Transistor T3 umgeschaltet und fliesst nach Bezugspotential, so dass sich in diesem Falle der Pegel am Ausgangsanschluss F ändert und ein positiver Fehlerimpuls erzeugt wird. Entsprechend wird durch einen negativen Eingangssignalimpuls und ein entsprechendes Ausgangssignal $u_n$ am zweiten Zeitentscheider ZE2 der Transistor T5 leitend geschaltet. Da in diesem Falle aber noch der Transistor T1 leitend ist und der Transistor T2 gesperrt ist, kann der erste negative Signalimpuls am Ausgang F des Coderegelprüfers nicht wirksam werden. Mit dem Ende dieses ersten Signalimpulses wird aber das RS-Flip-Flop umgeschaltet und über den 1-Pegel am inversen Ausgangsanschluss $\overline{AS}$ der Transistor T2 eingeschaltet. Tritt nun ein zweiter negativer Eingangssignalimpuls als Codefehler Cf auf, dann wird der über den Transistor T2 fliessende Strom über den Transistor T5 nach Bezugspotential abgeleitet, so dass sich eine Pegeländerung am Widerstand R und damit ein Fehlerimpuls am Ausgangsanschluss F des Coderegelprüfers ergibt.

Zur Überwachung des Coderegelprüfers ist den Transistoren T1 und T2 je ein weiterer Transistor T1′, T2′ emitter- und kollektorseitig parallelgeschaltet. Die Basisanschlüsse der zusätzlichen Transistoren sind mit den Eingängen A, B für Prüfimpulse verbunden. Zur Überprüfung des Codeprüfers wird an die Basisanschlüsse der zusätzlichen Transistoren T1′, T2′ nacheinander kurzzeitig ein hohes Potential als Prüfimpuls angelegt. Liegt der Prüfimpuls am Anschluss A, dann leitet der zusätzliche Transistor T1′. In diesem Falle wird bei jedem positiven Eingangssignalimpuls der Transistor T3 leitend, so dass sich bei jedem positiven Eingangssignalimpuls eine Pegeländerung am Ausgangsanschluss F ergibt. Liegt entsprechend der Prüfimpuls am Anschluss B an, dann wird bei jeden negativen Eingangssignalimpuls der Transistor T5 leitend, so dass sich dann jeweils eine Pegeländerung an Ausgangsanschluss F ergibt. Die Anzahl der Zählerimpulse am Ausgangsanschluss F des Coderegelprüfers kann nun sowohl nach Polaritäten getrennt als auch für beide Polaritäten gemeinsam in einen Zähler aufsummiert werden.

Eine Funktionsstörung des Coderegelprüfers beispielsweise durch Leitungsunterbrechung, Leitungskurzschluss oder Ausfall eines der Transistoren kann daran erkannt werden, dass entweder während der Prüfphase eine zu geringe Anzahl oder keine Fehlerimpulse auftreten, oder aber das ausserhalb der Prüfphase eine sehr hohe Anzahl von Fehlerimpulsen auftritt, die zu einem Zählerüberlauf führen kann.

Durch die Gegentaktansteuerung des Coderegelprüfers wird der Einsatz bei hohen Übertragungsgeschwindigkeiten ermöglicht, so dass auch eine Codefehlerauswertung bei Übertragungsgeschwindigkeiten über 500 Mbit/s möglich ist.

## Patentansprüche

1. Regenerator für digitale Signale im AMI-Code mit einer ersten Reihenschaltung eines ersten Amplitudenentscheiders und eines ersten Zeitentscheiders für die Regenerierung der positiven Signalimpulse, mit einer zweiten Reihenschaltung eines zweiten Amplitudenentscheiders und eines zweiten Zeitentscheiders für die Regenerierung der negativen Signalimpulse und mit einem RS-Flip-Flop, dessen Setzeingang mit einem Ausgang der ersten Reihenschaltung und dessen Rücksetzeingang mit einem Ausgang der zweiten Reihenschaltung verbunden ist und an dessen Ausgang regenerierte digitale Signale im Differenz-Binärcode entnehmbar sind, dadurch gekennzeichnet, dass zusätzlich die Ausgänge der ersten und der zweiten Reihenschaltung mit zugeordneten Eingängen eines Coderegelprüfers (VM) verbunden sind, dass der Coderegelprüfer einen ersten aus zwei Transistoren (T1, T2) bestehenden emittergekoppelten Differenzverstärker enthält, dessen gemeinsamer Emitteranschluss mit einer Stromquelle verbunden ist, dass der Basisanschluss des einen Transistors (T1) mit dem einen und der Basisanschluss des anderen Transistors (T2) mit dem inversen Ausgangsanschluss (AS, $\overline{AS}$) des RS-Flip-Flops (RSFF) verbunden ist, dass der Kollektoranschluss des ersten Transistors (T1) mit den verbundenen Emitteranschlüssen eines dritten und eines vierten Transistors (T3, T4) verbunden ist, dass der Basisanschluss des dritten Transistors (T3) mit dem Ausgangsanschluss der ersten Reihenschaltung verbunden ist, dass der Basisanschluss des vierten Transistors (T4) mit dem inversen Ausgangsanschluss der ersten Reihenschaltung verbunden ist, dass der Kollektoranschluss des zweiten Transistors (T2) mit den verbundenen Emitteranschlüssen eines fünften und eines sechsten Transistors (T5, T6) verbunden ist, dass der Basisanschluss des fünften Transistor (T5) mit dem Ausgangsanschluss der zweiten Reihenschaltung und der Basisanschluss des sechsten Transistors (T6) mit dem inversen Ausgangsanschluss der zweiten Reihenschaltung verbunden ist, dass der Kollektoranschluss des fünften Transistors (T5) mit Bezugspotential und der Kollektoranschluss des sechsten Transistors (T6) mit dem Ausgangsanschluss für Fehlerimpulse (F) verbunden ist.

2. Regenerator nach Patentanspruch 1, dadurch gekennzeichnet, dass dem ersten Transistor (T1) ein weiterer Transistor (T1') emitter- und kollektorseitig parallelgeschaltet ist und dass der Basisanschluss dieses Transistors mit einem ersten Anschluss (A) für Prüfimpulse verbunden ist, dass dem zweiten Transistor (T2) ein weiterer Transistor (T2') emitter- und kollektorseitig parallelgeschaltet ist und dessen Basisanschluss mit einem zweiten Anschluss (B) für Prüfimpulse verbunden ist.

## Revendications

1. Régénérateur pour des signaux numériques en code AMI, avec un premier montage série d'une première unité de décision d'amplitude et d'une première unité de décision des temps pour la régénération des impulsions de signaux positives, avec un second circuit série comportant une seconde unité de décision d'amplitude ed d'une seconde unité de décision des temps pour la régénération des impulsions de signaux négatives, et avec un multivibrateur bistable, du type RS, dont l'entrée de commande est reliée avec une sortie du premier circuit série et dont l'entrée de remise à l'état initial est reliée à une sortie du second circuit série, et à la sortie duquel peuvent être prélevés des signaux numériques régénérés, en code binaire-différentiel, caractérisé par le fait qu'en plus, les sorties du premier circuit série et du second circuit série sont reliées avec des entrées associées d'un vérificateur de la règle de codage (VM), que le vérificateur de la règle de codage comporte un amplificateur différentiel à couplage d'émetteur, constitué par deux transistors (T1, T2), et dont la borne d'émetteur commun est reliée à une source de courant, que la borne de base de l'un (T1) des transistors est reliée avec l'une des bornes de sortie et la borne de base de l'autre (T2) des transistors est reliée à la borne de sortie inverse (AS; $\overline{AS}$) du multivibrateur RS (RSFF), que la borne de collecteur du premier transistor (T1) est reliée aux bornes d'émetteur, réliées entre elles, d'un troisième et d'un quatrième transistor (T3, T4), que la borne de base du troisième transistor (T3) est reliée à la borne de sortie du premier circuit série, que la borne de base du quatrième transistor (T4) est reliée à la borne de sortie inverse du premier circuit série, que la borne de collecteur du second transistor (T2) est reliée avec les bornes d'émetteur, réliées entre elles, d'un cinquième et d'un sixième transistor (T5, T6), que la borne de base du cinquième transistor (T5) est reliée à la borne de sortie du second circuit série et la borne de base du sixième transistor (T6) est reliée à la borne de sortie inverse du second circuit série, que la borne de collecteur du cinquième transistor (T5) est reliée au potentiel de référence et la borne de collecteur du sixième transistor (T6) est reliée à la borne de sortie pour les impulsions d'erreur (F).

2. Régénérateur selon la revendication 1, caractérisé par le fait qu'en parallèle au premier transistor (T1) est monté un transistor supplémentaire (T1'), côté émetteur et côté collecteur, et que la borne de base de ce transistor est reliée à une première borne (A) pour des impulsions de vérification, qu'avec le second transistor (T2) est relié un autre transistor (T2'), côté émetteur et côté collecteur, et dont la borne de base est reliée à une seconde borne (B) pour des impulsions de vérification.

## Claims

1. Regenerator for AMI-coded digetal signals with a first series circuit of a first amplitude deciding circuit and of a first time deciding circuit for the regeneration of the positive signal pulses, with a second series circuit of a second amplitude deciding circuit and of a second time deciding circuit for the regeneration of the negative signal pulses and with an RS flip flop the set input of which is connected to an output of the first series circuit and the reset input of which is connected to an output of the second series circuit and at the output of which regenerated digital signals in differential binary code can be picked up, characterized in that, additionally, the outputs of the first and the second series circuit are connected to associated inputs fo a code violation monitor (VM), that the code violation monitor contains a first emitter-coupled differential amplifier consisting of two transistors (T1, T2) the common emitter connection of which is connected to a current source, that the base connection of one transistor (T1) is connected to one and the base connection of the other transistor (T2) is connected to the inverse output connection (AS, AS) of the RS flip flop (RSFF), that the collector connection of the first transistor (T1) is connected to the joined emitter connections of a third and of a fourth transistor (T3, T4), that the base connection of the third transistor (T3) is connected to the output connection of the first series circuit, that the base connection of the fourth transistor (T4) is connected to the invers output connection of the first series circuit, that the collector connection of the second transistor (T2) is connected to the joined emitter connections of a fifth and sixth transistor (T5, T6), that the base connection of the fifth transistor (T5) is connected to the output connection of the second series circuit and the base connection of the sixth transistor (T6) is connected to the inverse output connection of the second series circuit, that the collector connection of the fifth transistor (T5) is connected to reference potential and the collector connection of the sixth transistor (T6) is connected to the output connection for error pulses (F).

2. Regenerator according to Patent Claim 1, characterized in that the first transistor (T1) is connected in parallel with the emitter and collector side of a further transistor (T1') and that the base connection of this transistor is connected to a first connection (A) for test pulses, in that the second transistor (T2) is connected in parallel with the emitter and collector side of a further transistor (T2') and its base connection is connected to a second connection (B) for test pulses.

1/1

**FIG 1**

**FIG 2**

**FIG 3**